# EUROPEAN PATENT SPECIFICATION

(11) **EP 1 867 455 B1**
(45) Date of publication and mention of the grant of the patent: **07.08.2013**
(21) Application number: 07101979.8
(22) Date of filing: 08.02.2007
(51) Int. Cl.: B29C 44/12, B29C 33/12, B29C 45/14, B29K 75/00

(54) **Cushion body and manufacturing method for a cushion body**
Kissenkörper und Herstellungsverfahren dafür
Corps de coussin et son procédé de fabrication

(30) Priority: 16.06.2006 JP 2006166936
(43) Date of publication of application: 19.12.2007
(73) Proprietor: INOAC CORPORATION, Nagoya-shi, Aichi 450-8691 (JP)
(72) Inventor: Wada, Hirotaka, Anjo-shi Aichi 446-8504 (JP)
(74) Representative: Sherrard-Smith, Hugh

(56) References cited:
- EP-A1- 0 231 968
- EP-A2- 1 702 948
- DE-A1- 3 733 284
- FR-A5- 2 084 293
- US-A- 4 349 494
- US-A- 5 739 173

## Description

The present invention relates to a cushion body and a manufacturing method for the same, and more particularly to a cushion body which is preferable for a cushion body for a seat of a motor vehicle, train, airplane and the like, and has an improved fire retardant property, and a manufacturing method for the same.

Conventionally, in a cushion body for a seat mounted on, for example, a passenger transport device, for example, a motor vehicle, train or airplane, weight reduction is required in light of improved fuel consumption, in addition to cushioning properties and a durability. Further, a high fire retardant property is required as much as possible for suppressing the spreading of fire in a disaster.

Japanese Laid-Open Patent Publication No. 2002-129456 discloses a cushion body having a structure in which a carbon fiber web is laminated along an in-plane direction orthogonal to a thickness direction of the cushion body and the carbon fiber web is compressed along the in-plane direction, for the purpose of improving a fire retardant property and preventing a permanent set. Japanese Laid-Open Patent Publication No. 2005-102950 discloses a cushion body in which a waste material of a woven fabric crushed into small pieces is formed by being bonded and solidified by a resin fine particle mixed with an expandable graphite, for the purpose of improving the fire retardant property.

EP 1 702 948 A2 discloses a stuffed structure, comprising a core and a coating, said core being comprised of melamine foam and said coating being comprised of a polyurethane foam comprising, for 100 parts in weight of a polyol, between 15 and 30 parts in weight of graphite and between 4 and 10 parts in weight of hollow charges of glass material, and between 50 and 70 parts in weight of isocyanate.

US 4,349,494 discloses articles having increased fire-retardant properties by surrounding a foraminous core having the desired product properties with an adherent protective layer of a hydrophilic polyurethane foam having large amounts of fire-retardant fillers. The core can be made of rigid, semi-rigid or flexible foams.

There is taken into consideration a reduction of the permanent set in the cushion body employing the carbon fiber web or the waste material of the crushed woven fabric. However, since the carbon fiber web and the woven fabric are formed by a fiber body, there is a problem in that it is hard to sufficiently suppress the permanent set in case the cushion body is used for a long period and in case the cushion body is used very often. Particularly, in a case where an unspecified number of passengers are seated on the cushion body on successive days such as a cushion body for the seat of a bus, train, airplane and the like, there is a problem in that the conventional cushion body has insufficient durability. Further, cushioning and lightweight properties are required in addition to a fire retardant property and the durability of a cushion body for a seat mounted for a motor vehicle, including a bus, train, airplane and the like. However, it has been conventionally impossible to obtain a cushion body which can sufficiently meet the need for fire retardant, cushioning, durability and lightweight properties.

An objective of the present invention is to provide a cushion body having improved fire retardant, cushioning, durability and lightweight properties.

In accordance with one aspect of the present invention, a manufacturing method for a cushion body (10) including
arranging a core material (11) formed by a previously foamed and hardened resin foam body within a foam molding die (30) in a state spaced away from the die surface, said core material is formed by a melamine resin foam body; and
filling said foam molding die with a resin foam body raw material in liquid form including the fire retardant additive, and foaming and hardening the resin foam body raw material within the foam molding die to form said surface layer material (15) to cover the periphery of said core material, said resin foam body raw material is formed by a polyurethane resin foam body raw material including an expandable graphite; characterized in that said foam molding die is provided with an upper die (31) and a lower die (37),
wherein said upper die is provided with a first pin provided in a protruding manner on said die surface of said upper die, and a second pin (35) in which a protruding length from the die surface is shorter than that of said first pin,
wherein a distal end of said first pin has a narrow or tapered shape for being stuck into said core material,
wherein a distal end of said second pin is thicker than the distal end of said first pin,
wherein said arranging said core material within the foam molding die includes attaching said core material to said upper die in such a manner that said core material is stuck into said first pin (33) of said upper die (31) and is brought into contact with the distal end of said second pin (35),
wherein said forming said surface layer material includes injecting said resin foam body raw material within said lower die (37), and arranging said core material within the foam molding die in a state spaced away from each of said die surfaces through clamping said foam molding die.

The present invention also includes a cushion body when made in accordance with the method of the present invention.

Other aspects and advantages of the invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1 is a perspective view showing a cushion body in accordance with an embodiment of the present invention;
Fig. 2 is a cross sectional view taken along line 2-2 in Fig. 1;
Fig. 3 is a plan view showing a core material;
Fig. 4A is a cross sectional view showing a foam molding die;
Fig. 4B is an enlarged cross sectional view showing a part of the foam molding die;
Fig. 5 is a bottom elevational view showing a die surface of an upper die;
Fig. 6 is a cross sectional view showing an attachment of the core material to the foam molding die and an injection of a raw material;
Fig. 7A is a cross sectional view showing a state in which the raw material is foamed and hardened within the foam molding die;
Fig. 7B is a cross sectional view showing a state in which the raw material is foamed and hardened within the foam molding die;
Fig. 7C is a cross sectional view showing a state in which the raw material is foamed and hardened within the foam molding die; and
Fig. 8 is a cross sectional view showing a state in which the cushion body is removed from the die.

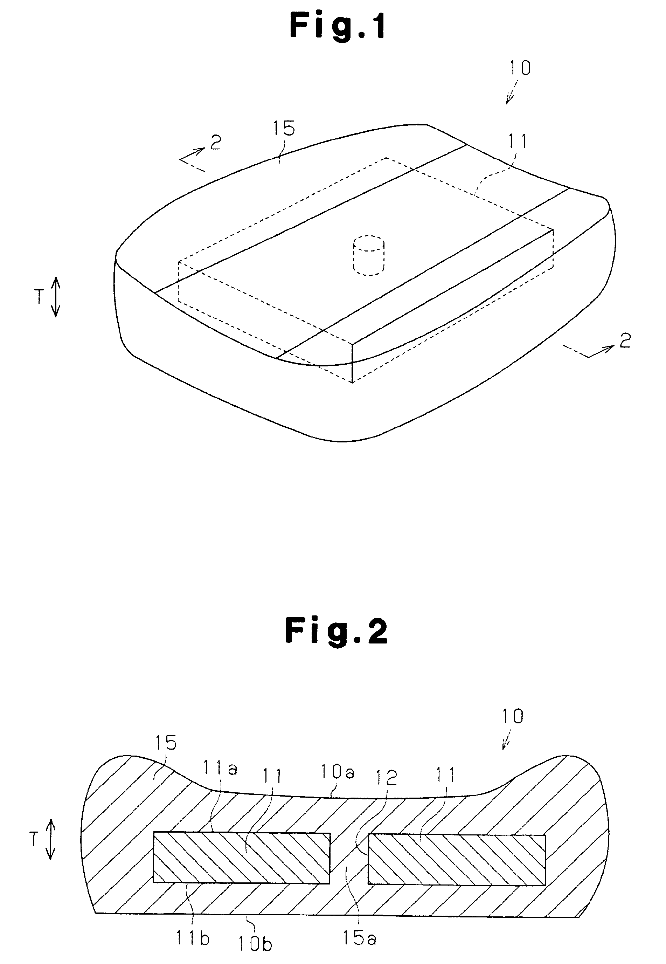

A description in detail will be given below of an embodiment in accordance with the present invention with reference to the accompanying drawings. As shown in Figs. 1 and 2, a cushion body 10 is used as a seat for a passenger transport device, for example, a motor vehicle, including a bus, train or airplane. The seat includes a seat portion and a backrest portion. The cushion body 10 is formed by a core material 11 and a surface layer material 15, and has a shape corresponding to the passenger transport device to which the cushion body 10 is mounted.

The core material 11 is formed by a known melamine resin foam body, and has an approximately flat shape provided with a predetermined thickness in an illustrated embodiment. The melamine resin foam body is obtained by foaming a resin composition material having a melamine formaldehyde condensation material and a blowing agent as a main component, and has an excellent lightweight property. As components used for manufacturing the melamine resin foam body, there are used various components which are known as components used at a time of manufacturing the melamine formaldehyde resin or the foam body thereof. A manufacturing method for the melamine resin foam body is described, for example, in Japanese Laid-Open Patent Publication No. 55-142628 and Japanese Laid-Open Patent Publication No. 56-152848. The melamine resin foam body may be, for example, Basotect (trade mark in Japan) manufactured by BASF Ltd.

The shape of the core material 11 is not limited to a flat shape provided with the predetermined thickness, but the core material 11 may have such a shape that the thickness partly changes in correspondence with change of thickness of the cushion body 10. The thickness of the core material 11 is preferably set to 40 to 60% of the thickness of the cushion body 10 in order to increase the lightweight property and obtain an improved cushioning property with the surface layer material 15. The core material 11 is positioned between the front surface 10a and the back surface 10b of the cushion body 10 and is spaced away from the front surface 10a and the back surface 10b. The distance from the core material 11 to the front surface 10a and the distance from the core material 11 to the back surface 10b are appropriately set. The front surface of the core material 11 has an approximately rectangular shape in the illustrated embodiment, however, the shape which the front surface of the core material 11 has is not limited to an approximately rectangular shape. For example, the front surface of the core material 11 may have a shape similar to the shape of the front surface 10a of the cushion body 10, and the structure may be made such that the width of the front surface of the core material 11 is partly changed, and a corner of the front surface of the core material 11 is rounded.

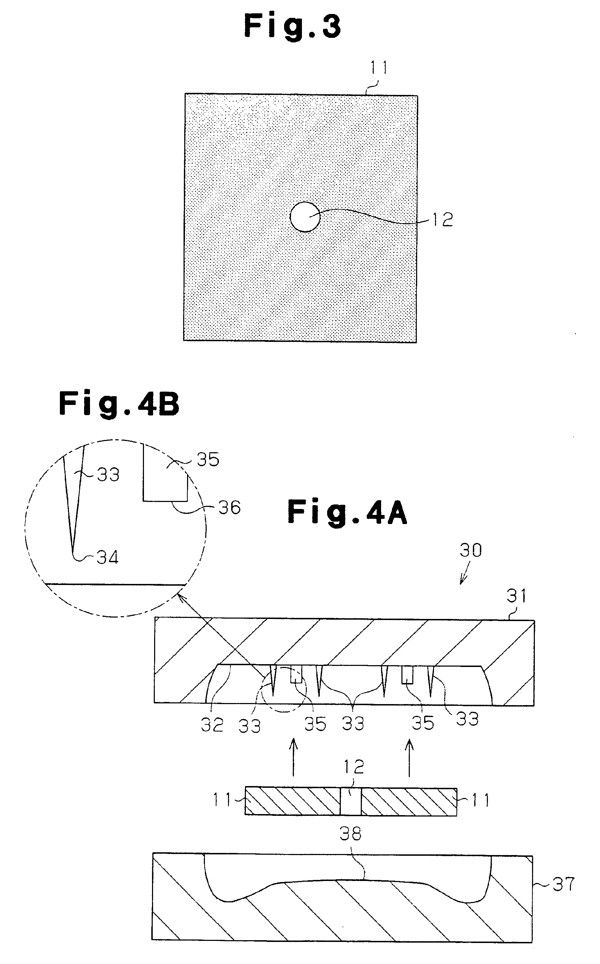

The core material 11 has a through hole 12 passing through both surfaces of the core material 11 along the thickness direction T of the cushion body 10. The surface layer material 15 fills the through hole 12, and a columnar portion 15a of the surface layer material 15 is formed within the through hole 12. As shown in Fig. 3, in the core material 11 in accordance with the present embodiment, one through hole 12 is formed in a center of the core material 11. However, a formed position of the through hole 12 is not limited to the center of the core material 11. Further, a plurality of through holes 12 may be formed in the core material 11.

The diameter of the through hole 12 is set to a dimension that allows raw material for the surface layer material 15 to enter the through hole 12 so as to be foamed and hardened at the time of foam molding of the surface layer material 15, and is appropriately determined. Preferably, the diameter of the through hole 12 is between 30 and 150 mm. In this case, an integrally formed property between the core material 11 and the surface layer material 15 is increased more by the columnar portion 15a of the surface layer material 15, whereby it is possible to suppress displacement generated between both the surfaces of the core material 11 and the surface layer material 15, for example, at when the user is seated. Further, part of the pressing force caused by the seated user is effectively received by the columnar portion 15a of the surface layer material 15, and it is possible to effectively suppress buckling of the core material 11.

The surface layer material 15 covers the core material 11, and is connected to the core material 11 so as to be integrally formed. Further, part of the surface layer material 15 fills the through hole 12 of the core material 11. Accordingly, the upper portion and lower portions of the surface layer material 15 are coupled between both surfaces 11a and 11b in the thickness direction of the core material 11 through the through hole 12 within the core material 11.

The surface layer material 15 is formed by a polyurethane resin foam body in which expandable graphite is dispersed, and is formed by foaming a polyurethane resin foam body raw material to which the expandable graphite is added. For the expandable graphite, it is possible to use a known expandable graphite, for example, expandable graphite in which a natural graphite is dipped into a liquid mixture such as sulfuric acid, nitric acid or the like and an oxidizing agent such as hydrogen peroxide, hydrochloric acid or the like is added. The expandable graphite preferably employs a expandable graphite having an expansion starting temperature between 150 and 300°C, an expansion volumetric capacity between 150 and 250 ml/g and an average grain diameter before expansion between 100 and 1000 µm. The polyurethane resin foam body raw material to which the expandable graphite is added corresponds to a raw material in which the expandable graphite is added to the known polyurethane resin foam body raw material, for example, formed by a polyol, a polyisocyanate, a blowing agent and a catalyst, and the content of each of the components is appropriately adjusted, for example, in correspondence to the hardness required for the cushion body 10.

The apparent density of the cushion body 10 measured in accordance with ISO0845 which is an International Standard (JIS K 7222, a Japanese Industrial Standard) is preferably between 45 and 70 kg/m³. The hardness of the cushion body 10 measured in accordance with ISO2439 (JIS K 6400-2) is preferably between 160 and 240 N/314 cm². The compression residual strain of the cushion body 10 measured in accordance with ISO1856 (JIS K 6400-4) is preferably between 3 and 8 %.

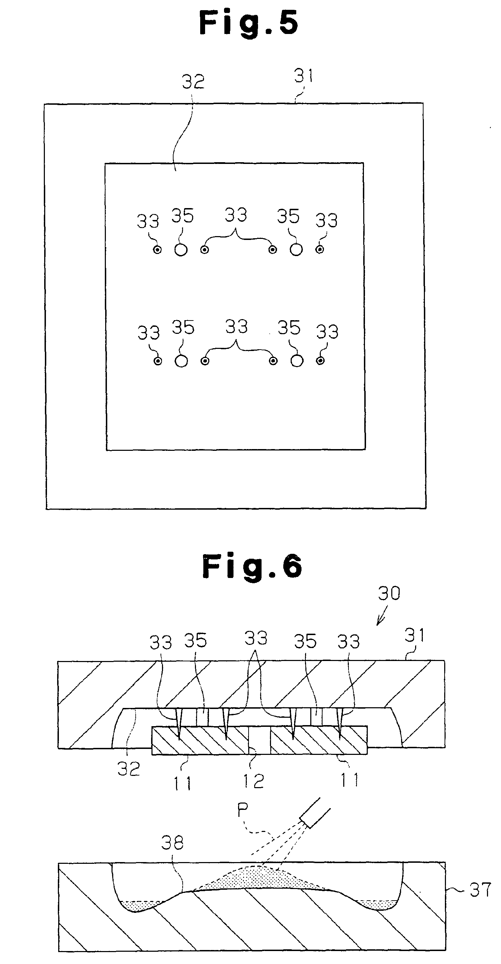

Next, a description will be given of an embodiment of a manufacturing method for the cushion body 10 in accordance with the present invention. The manufacturing method for the cushion body 10 includes an attaching step for the core material 11, a filling step for the raw material, a foaming and hardening step, and an ejecting step. In the attaching step for the core material 11, the core material 11 formed by a previously foamed and hardened resin foam body is attached to a foam molding die 30, as shown in Figs. 4A, 4B, and 6. The core material 11 is formed by the melamine resin foam body. The through hole 12 is previously formed in the core material 11.

A foam molding die 30 is formed by an upper die 31 and a lower die 37. The upper die 31 has an upper die surface 32 corresponding to an outer shape of the manufactured cushion body 10. The lower die 37 has a lower die surface 38 corresponding to an outer shape of the manufactured cushion body 10. First pins 33 and second pins 35 extending to a lower side are provided in a protruding manner on the upper die surface 32. The distal end 34 of each first pin 33 is formed narrowly or tapered, and is stuck into the core material 11 when the core material 11 is attached to the foam molding die 30. The protruding length of each second pin 35 from the upper die surface 32 is shorter than that of the first pins 33. The distal end surface of each second pin 35 is formed thicker than the distal end 34 of each first pin 33, and is difficult to stick into the core material 11 when the core material 11 is attached to the foam molding die 30. As shown in Figs. 4A and 4B, the distal end of each second pin 35 preferably has a flat shape or a curved shape.

When the core material 11 is attached to the upper die 31, the first pins 33 are stuck into the core material 11, and the distal ends 36 of the second pins 35 are brought into contact with the core material 11 and are not stuck into the core material 11. The protruding length of each second pin 35 from the upper die surface 32 is set such that the core material 11 is spaced away from each of the die surfaces 32 and 38 when the upper die 31 is put on the lower die 37 and the foam molding die 30 is closed, after the core material 11 is attached to the upper die 31 as mentioned above.

The quantity of the first pins 33 and the second pins 35 is appropriately set. In order to stably hold the core material 11, a plurality of first pins 33 and second pins 35 are preferably formed. The first pins 33 and the second pins 35 are formed at a position which does not correspond to the through hole 12 in the core material 11. In order to hold the core material 11 horizontally regardless of the outer shape of the cushion body 10, a plurality of second pins 35 are preferably formed without being biased to a position where the core material 11 is attached in the die surface 32 of the upper die 31 and in a state of being uniformly spaced away from each other. In order to hold the core material 11 in an inclined state, the height of each of the second pins 35 may be appropriately changed. Fig. 5 exemplifies the upper die surface 32 in a case where the first pins 33 and the second pins 35 are formed at four positions around the position corresponding to the through hole 12 of the core material 11 so as to be spaced at a predetermined interval.

In a raw material filling step, as shown in Fig. 6, a fire retardant additive is added, and a predetermined amount of resin foam body raw material P in liquid form is used to fill the lower die 37. The fire retardant additive is an expandable graphite. Polyurethane resin is used as the resin foam body raw material and expandable graphite is used as the fire retardant additive, that is, the polyurethane resin foam body raw material P to which the expandable graphite is added is used as the resin foam body raw material P to which the fire retardant additive is added. A filling amount of the polyurethane resin foam body raw material P to which the expandable graphite is added, can fill in the foam molding die 30 at a time of foaming the raw material P, and is determined, for example, in correspondence to the hardness and the apparent density of the target cushion body 10.

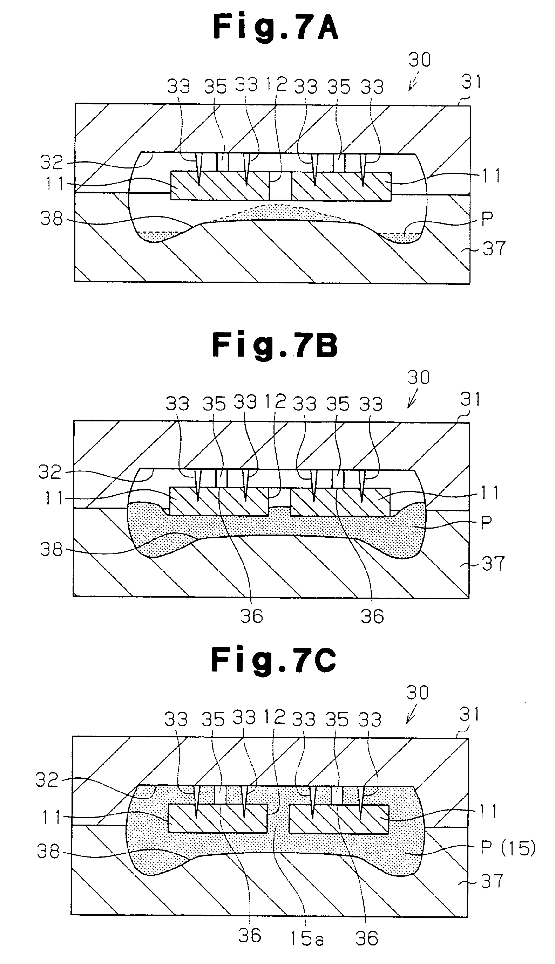

In the foaming and hardening step, the upper die 31 is put on the lower die 37 and the foam molding die 30 is clamped, as shown in Fig. 7A. At this time, the core material 11 is arranged in a state of being spaced away from each of the die surfaces 32 and 38. Next, as shown in Figs. 7B and 7C, the polyurethane resin foam body raw material P to which the expandable graphite is added is foamed and hardened within the foam molding die 30. At this time, the surface layer material 15 formed by the resin foam body in which the fire retardant additive is dispersed, that is, the surface layer material 15 formed by the polyurethane resin foam body in which the expandable graphite is dispersed is formed so as to cover the periphery of the core material 11.

The liquid level of the polyurethane resin foam body raw material P to which the expandable graphite is added rises up toward the die surface 32 of the upper die 31 on the basis of an increase of the volume of the raw material P in correspondence to the progress of the foaming. Further, the polyurethane resin foam body raw material P to which the expandable graphite is added is brought into contact with the lower surface of the core material 11 as shown in Fig. 7B in the middle of the ascent of the liquid level, and presses the core material 11 to the upper side. At this time, the distal end 36 of the second pin 35 is brought into contact with the upper surface of the core material 11 so as to prevent the core material 11 from rising up, and the position of the core material 11 is maintained in a thickness direction of the foam molding die 30, that is, a vertical direction.

In a state in which the position of the core material 11 is maintained, the polyurethane resin foam body raw material P to which the expandable graphite is added is used to fill the foam molding die 30. Further, at a time of foaming, a part of the polyurethane resin foam body raw material P to which the expandable graphite is added enters the through hole 12 of the core material 11 so as to fill the through hole 12, and thereafter reaches the portion between the upper surface of the core material 11 and the die surface 32 of the upper die 31. The rest of the polyurethane resin foam body raw material P to which the expandable graphite is added flows upward along an outer periphery of the core material 11, and is converged with the portion ascending while filling the through hole 12 so as to cover the periphery of the core material 11. Further, as is known, since the polyurethane resin foam body raw material P provides an adhesion property at the time of foaming, the surface Layer material 15 formed so as to cover the periphery of the core material 11 is adhered to the core material 11 so as to be integrally formed, on the due to the adhesion property at the time of foaming the polyurethane resin foam body raw material P to which the expandable graphite is added.

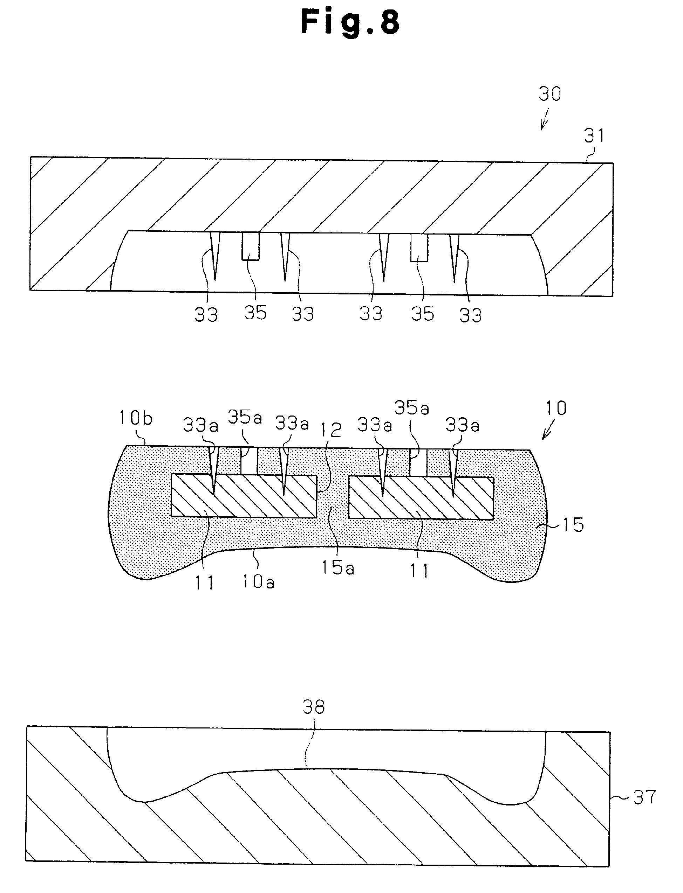

In the ejecting step, as shown in Fig. 8, ejecting is achieved by moving the upper die 31 and the lower die 37 away from each other so as to open the foam molding die 30, and removing the cushion body 10 in which the core material 11 and the surface layer material 15 are integrally formed from the first pins 33 and the second pins 35.

In the cushion body 10 obtained by the ejecting step mentioned above, the holes 33a and 35a formed by the first pins 33 and the second pins 35 are left on the back surface 10b of the cushion body formed by the die surface 32 of the upper die 31. However, since the cushion body 10 is generally used in a state in which the front surface material is attached to the outer periphery thereof, the holes 33a and 35a formed by the first pins 33 and the second pins 35 are covered, and there is no risk that the apperance of the cushion body 10 will be defiled at the time of use.

The present embodiment has the following advantages.

In a cushion body 10 in accordance with the present embodiment, since the core material 11 formed by the melamine resin foam body is used, it is possible to improve the lightweight property of the cushion body 10. Further, since the surface layer material 15 formed by the polyurethane resin foam body in which the expandable graphite is dispersed is provided so as to cover the periphery of the core material 11, the cushion body 10 can achieve a high fire retardant property caused by the expandable graphite, and an improved cushioning property caused by the polyurethane resin foam body. In addition, since the polyurethane resin foam body has a high elastic restoring performance, a whole of the surface layer material 15 has a high elastic restoring performance. The periphery of the core material 11 is covered by the surface layer material 15 mentioned above. Accordingly, even if the cushion body 10 is pressed by the sitting, it is possible to suppress the buckling of the core material 11, that is, the generation of the state in which a part of the core material 11 is deformed and is not restored by a stress concentration, on the basis of the existence of the surface layer material 15, and the cushion body 10 can achieve an improved durability.

The core material 11 has the through hole 12 extending along the thickness direction of the cushion body 10, and the surface layer material 15 fills the through hole 12. Accordingly, the integrally formed property between the core material 11 and the surface layer material 15 becomes further higher, and displacement is hard to be generated between both of the surfaces 11a and 11b of the core material 11 and the surface layer material 15, for example, when the user of the cushion body 10 is seated. Further, in the through hole 12, the surface layer material 15 filling the through hole 12, that is, the polyurethane resin foam body in which the expandable graphite is dispersed forms the columnar portion 15a. Accordingly, it is possible to effectively receive the pressing force of the cushion body 10, for example, when the user of the cushion body 10 is seated, by the columnar portion 15a within the through hole 12 of the core material 11, and it is possible to more effectively suppress buckling of the core material 11 so as to further the durability of the cushion body 10.

In a manufacturing method in accordance with the present embodiment, the core material 11 formed by the previously foamed and hardened resin foam body is arranged within the foam molding die 30 so as to be spaced away from each of the die surfaces 32 and 38. Further, the resin foam body raw material to which the fire retardant additive is added is foamed and hardened within the foam molding die 30. Accordingly, it is possible to easily manufacture the cushion body 10 in which the periphery of the core material 11 formed by the resin foam body is covered by the surface layer material 15 formed by the resin foam body in which the fire retardant additive is dispersed.

The distal ends 36 of the second pins 35 are brought into contact with the upper surface 11a of the core material 11 at a time when the upward pressing force is applied to the core material 11 on the basis of the foaming of the resin foam body raw material to which the fire retardant additive is added, whereby it is possible to prevent the core material 11 from rising up, and it is possible to keep the position of the core material 11 within the foam molding die 30 constant. Therefore, it is possible to position the core material 11 in the center of the cushion body 10, and it is possible to prevent the cushioning and fire retardant properties, for example, of the cushion body 10, and the buckling of the core material 11 from being changed, due to the dispersion of the position of the core material 11. As a result, it is possible to easily manufacture the cushion body 10 in which the cushioning, durability and fire retardant properties are fixed.

A description will be given below of an example of manufacturing a cushion body for a seat of a motor vehicle, train, airplane and the like by using the foam molding die 30 constituted by the upper die 31 and the lower die 37 shown in Figs. 4 to 8.

In the foam molding die 30, the maximum width of a molding space formed between the die surface 32 of the upper die 31 and the die surface 38 of the lower die 37, that is, the maximum distance between the die surface 32 and the die surface 38 is 150 mm, and the minimum width of the molding space, that is, the minimum distance between the die surface 32 and the die surface 38 is 50 mm. Dimensions in the planar direction of the molding space is approximately 450 x 500 mm, and the volumetric capacity thereof is 19000 ml. The distal end of each first pin 33 has a tapered needle shape, and the protruding length of each first pin 33 from the upper die surface 32 is 70 mm, and the diameter of the base portion of each first pin 33 is 2 mm. Each second pin 35 has a columnar shape, the diameter of each second pin 35 is 6 mm, and the protruding length of the second pin 35 from the upper die surface 32 is 25 mm. The surface of the distal end 36 of each second pin 35 is flat. Numbers and positions of the first pins 33 and the second pins 35 are shown in Fig. 5. The interval between the second pins 35 is 250 mm, and the interval between each of the second pins 35 and the first pin 33 positioned on both sides thereof is 30 mm.

The core material 11 is formed by the melamine resin foam body (trade mark: BASOTECT) manufactured by BASF Ltd., and is formed by a flat plate having a dimension of 40 × 340 × 340 mm. The through hole 12 has a diameter of 80 mm and is formed in the center of the core material 11.

The polyurethane resin foam body raw material P to which the expandable graphite was added was prepared on the basis of a composition for each of the components as shown in Table 1. In Table 1, polyol 1 indicates a polyether polyol (product name: FA703, manufactured by Sanyo Chemical Industries, Ltd., having molecular weight of 5000, functional group number of 3 and hydroxyl group number of 36). Polyol 2 indicates a polymer polyol (product name: FA728, manufactured by Sanyo Chemical Industries, Ltd., having molecular weight of 5000, functional group number of 3 and hydroxyl group number of 28). Amine catalyst 1 indicates a diethanolamine, and amine catalyst 2 indicates a trimethylenediamine. Blowing agent indicates water, and foam stabilizer indicates a silicone foam stabilizer (product name: SF2961, manufactured by Toray Industries, Inc.). Expandable graphite indicates an expandable graphite having an expansion starting temperature of 300°C and an average grain diameter before expansion of 120 µm (product name: 8099, manufactured by Sumikin Chemical Co., Ltd). Polyisocyanate indicates a tolylidene diisocyanate (product name: T-80, manufactured by Nippon Polyurethane Industry Co., Ltd.).

**Table 1**

| | | |
|---|---|---|
| polyol 1 | | 70 weight part |
| polyol 2 | | 30 weight part |
| amine catalyst 1 | | 2.0 weight part |
| amine catalyst 2 | | 0.7 weight part |
| blowing agent | | 3.5 weight part |
| foam stabilizer | | 0.7 weight part |
| expandable graphite | | 40 weight part |
| polyisocyanate | | 50 weight part |
| weight of entire cushion body 10 | | 1200 g |
| apparent density | | 60 kg/cm³ |
| hardness | | 220 N/314 cm² |
| compression residual strain | | 5 % |
| repeated compression residual strain | | 3 % |
| combustion test | 50 mm | incombustible |
| | 100 mm | incombustible |

The cushion body 10 obtained as mentioned above was measured by its entire weight, apparent density, hardness, compression residual strain, repeated compression residual strain, and fire retardant property. In other words, the apparent density of the cushion body 10 was measured in accordance with ISO845 (JIS K 7222). The hardness of the cushion body 10 was measured in accordance with ISO2439 (JIS K 6400-2). The compression residual strain of the cushion body 10 was measured in accordance with ISO1856 (JIS K 6400-4). The repeated compression residual strain of the cushion body 10 was measured in accordance with ISO3385 (JIS K 6400-4).

Further, a test piece having a length of 257 mm, a width of 182 mm, and a thickness of 50 mm or 100 mm was formed from the cushion body 10. Next, a combustion test was executed in accordance with a train material combustion test (A-A standard) as defined in Japan, by using the test piece. In other words, the test piece was inclined at an angle of 45 degrees with respect to a horizontal plane, and a combustion table installed below the test piece. The combustion table was installed at a position corresponding to a center of the test piece, and distance between the test piece and the combustion table set to 25.4 mm. Subsequently, a container accommodating 0.5 ml pure alcohol was installed on the combustion table. Next, the alcohol was ignited, and left until the alcohol burnt out. The ignition of the alcohol executed under an ambient atmosphere having a temperature between 15 and 30°C and an ambient atmosphere having a humidity between 60 and 75%. Further, the state of the test piece during the combustion of the alcohol and the state of the test piece after the combustion of the alcohol were observed.

The result of each of the test items is shown in Table 1. In Table 1, "incombustible" in the column "combustion test" indicates a case in which ignition did not occur in the test piece during the combustion of the alcohol, smoke generated from the test piece was minimal, and the width of a carbonized region in the test piece after the combustion of the alcohol and the width of a region in which a surface of the test piece was deformed was equal to or smaller than 10 mm. The result of measurement of the apparent density was used for determining the lightweight property of the cushion body 10, the result of measurement of the hardness was used for determining the cushioning property of the cushion body 10, the result of measurement of the compression residual strain and the repeated compression residual strain were used for determining the durability of the cushion body 10, and the result of the combustion test was used for determining the fire retardant property of the cushion body 10. As is known from the results of the respective test items, a cushion body 10 in accordance with the embodiment, has excellent lightweight, cushioning, durability and fire retardant properties.

## Claims

1. A manufacturing method for a cushion body(10) including
arranging a core material (11) formed by a previously foamed and hardened resin foam body within a foam molding die (30) in a state spaced away from the die surface, said core material being formed by a melamine resin foam body; and filling said foam molding die with a resin foam body raw material in liquid form including the fire retardant additive, and foaming and hardening the resin foam body raw material within the foam molding die to form said surface layer material (15) to cover the periphery of said core material, said resin foam body raw material is formed by a polyurethane resin foam body raw material including an expandable graphite; **characterized in that** said foam molding die is provided with an upper die (31) and a lower die (37),
wherein said upper die is provided with a first pin (33) provided in a protruding manner on said die surface of said upper die, and a second pin (35) in which a protruding length from the die surface is shorter than that of said first pin,
wherein a distal end of said first pin has a narrow or tapered shape for being stuck into said core material,
wherein a distal end of said second pin is thicker than the distal end of said first pin,
wherein said arranging said core material within the foam molding die includes attaching said core material to said upper die in such a manner that said core material is stuck into said first pin (33) of said upper die (31) and is brought into contact with the distal end of said second pin (35),
wherein said forming said surface layer material includes injecting said resin foam body raw material within said lower die (37), and arranging said core material within the foam molding die in a state spaced away from each of said die surfaces through clamping said foam molding die.

2. The manufacturing method according to claim 1, **characterized in that** said cushion body is further provided with a through hole formed in said core material and extending along a thickness direction of the cushion body,
wherein said resin foam body raw material enters the through hole when being foamed and hardened to be foamed and hardened within said through hole.

3. The manufacturing method according to claim 1, **characterized in that**:
said upper die is provided with a plurality of said first pins and second pins.

4. The manufacturing method according to claim 3, **characterized in that**:
said first pins and second pins are provided in a protruding manner on the die surface of said upper die in a state spaced away from one another uniformly.

5. The manufacturing method according to claim 11 or 12, **characterized in that**:
the protruding lengths of said respective second pins from the die surface of said upper die are different from one another.

6. A cushion body when made in accordance with the method of any claims 1 to 5.

## Patentansprüche

1. Herstellungsverfahren für einen Kissenkörper (10), aufweisend:
Anordnen eines Kernmaterials (11), das von einem zuvor geschäumten und gehärteten Harzschaumstoffkörper in einem Schaumstoff-Formwerkzeug (30) in einem von der Formoberfläche beabstandeten Zustand geformt wurde, wobei das Kernmaterial aus einem Melaminharz-Schaumstoffkörper geformt ist; und
Füllen des Schaumstoff-Formwerkzeugs mit einem Harzschaumstoffkörper-Rohmaterial in Flüssigform, das einen flammhemmenden Zusatzstoff enthält, und Schäumen und Härten des Harzschaumstoffkörper-Rohmaterials in dem Schaumstoff-Formwerkzeug zum Formen des Oberflächenschichtmaterials (15) zum Bedecken des Umfangs des Kernmaterials, wobei das Harzschaumstoffkörper-Rohmaterial von einem Polyurethanharz-Schaumstoffkörper-Rohmaterial geformt ist, das ein ausdehnungsfähiges Graphit enthält; **dadurch gekennzeichnet, dass** das Schaumstoff-Formwerkzeug mit einem oberen Formwerkzeug (31) und einem unteren Formwerkzeug (37) bereitgestellt ist,
wobei das obere Formwerkzeug mit einem ersten Stift (33) bereitgestellt ist, der auf vorstehende Art auf der Formwerkzeugoberfläche des oberen Formwerkzeugs bereitgestellt ist, und mit einem zweiten Stift (35), bei dem eine vorstehende Länge der Formwerkzeugoberfläche kürzer ist als die des ersten Stifts,
wobei ein distales Ende des ersten Stifts eine schmale oder verjüngte Form aufweist, um in dem Kernmaterial festzusitzen, wobei ein distales Ende des zweiten Stifts dicker ist als das distale Ende des ersten Stifts,
wobei das Anordnen des Kernmaterials in dem Schaumstoff-Formwerkzeug das Befestigen von dem Kernmaterial an dem oberen Formwerkzeug auf solche Art beinhaltet, dass das Kernmaterial in dem ersten Stift (33) des oberen Formwerkzeugs (31) festsitzt und in Kontakt mit dem distalen Ende des zweiten Stifts (35) gebracht wird,
wobei das Formen des Oberflächenschichtmaterials das Einspritzen des Harzschaumstoffkörper-Rohmaterials in das untere Formwerkzeug (37) und das Anordnen des Kernmaterials in dem Schaumstoff-Formwerkzeug in einem Zustand beinhaltet, in dem die Formwerkzeugoberflächen durch Verklemmen des Schaumstoffkörper-Formwerkzeugs jeweils voneinander beabstandet sind.

2. Herstellungsverfahren nach Anspruch 1, **dadurch gekennzeichnet, dass** der Kissenkörper ferner mit einem Durchgangsloch bereitgestellt ist, das in dem Kernmaterial ausgebildet ist und sich entlang einer Dickenrichtung des Kissenkörpers erstreckt,
wobei das Harzschaumstoffkörper-Rohmaterial in das Durchgangsloch eintritt, wenn es geschäumt und gehärtet wird, um in dem Durchgangsloch geschäumt und gehärtet zu werden.

3. Herstellungsverfahren nach Anspruch 1, **dadurch gekennzeichnet, dass**:
das obere Formwerkzeug mit mehreren ersten Stiften und zweiten Stiften bereitgestellt ist.

4. Herstellungsverfahren nach Anspruch 3, **dadurch gekennzeichnet, dass**:
die ersten Stifte und zweiten Stifte vorstehend auf der Formwerkzeugoberfläche des oberen Formwerkzeugs in einem Zustand bereitgestellt werden, bei dem sie gleichmäßig voneinander beabstandet sind.

5. Herstellungsverfahren nach Anspruch 1 oder 2, **dadurch gekennzeichnet, dass**:
die hervorstehenden Längen der entsprechenden zweiten Stifte von der Formwerkzeugoberfläche des oberen Formwerkzeugs unterschiedlich sind.

6. Kissenkörper, der gemäß dem Verfahren nach Anspruch 1 bis 5 hergestellt wurde.

## Revendications

1. Procédé de fabrication d'un corps (10) de coussin, le procédé comportant les étapes qui consistent à :
agencer dans un moule (30) de moulage de mousse, à distance de la surface du moule, un matériau d'âme (11) formé d'un corps de mousse de résine moussé préalablement et durci, ledit matériau d'âme étant formé d'un corps en mousse de résine de mélamine et
remplir ledit moule de moulage de mousse d'une matière première liquide du corps de mousse de résine, y compris l'additif retardateur de flammes, et mousser et durcir la matière première du corps de mousse de résine à l'intérieur du moule de moulage de mousse pour former ledit matériau (15) de couche de surface qui recouvre la périphérie dudit matériau d'âme,
ladite matière première du corps de mousse de résine étant formée d'une matière première de corps de mousse de résine en polyuréthane comprenant un graphite expansible,
**caractérisé en ce que**
ledit moule de moulage de mousse est doté d'un moule supérieur (31) et d'un moule inférieur (37),
ledit moule supérieur étant doté d'un premier goujon (33) qui déborde de ladite surface dudit moule supérieur et un deuxième goujon (35) dont la longueur de débord par rapport à la surface du moule est plus courte que celle dudit premier goujon,
l'extrémité distale dudit premier goujon présentant une forme étroite ou rétrécie de manière à être enfoncée dans ledit matériau d'âme,
l'extrémité distale dudit deuxième goujon étant plus épaisseur que l'extrémité distale dudit premier goujon,
ledit agencement dudit matériau d'âme à l'intérieur du moule de moulage de mousse comprenant la fixation dudit matériau d'âme audit moule supérieur de telle sorte que ledit matériau d'âme soit enfoncé dans ledit premier goujon (33) dudit moule supérieur (31) et soit mis en contact avec l'extrémité distale dudit deuxième goujon (35),
ledit moulage dudit matériau de couche de surface comprenant l'injection de ladite matière première de corps de mousse de résine dans ledit moule inférieur (37) et l'agencement dudit matériau d'âme à l'intérieur du moule de moulage de mousse à distance de chacune desdites surfaces de moule par serrage dudit moule de moulage de mousse.

2. Procédé de fabrication selon la revendication 1, **caractérisé en ce que** ledit corps de couche traversé par une perforation formé dans ledit matériau d'âme et s'étendant dans la direction de l'épaisseur du corps de coussin, ladite matière première de corps de mousse de résine pénétrant dans la perforation lorsqu'elle est moussée et durcie, pour être moussée et durcie à l'intérieur de ladite perforation.

3. Procédé de fabrication selon la revendication 1, **caractérisé en ce que** ledit moule supérieur et doté de plusieurs desdits premiers goujons et deuxièmes goujons.

4. Procédé de fabrication selon la revendication 3, **caractérisé en ce que** lesdits premiers goujons et lesdits deuxièmes goujons sont prévus de manière à déborder de la surface dudit moule supérieur en étant espacés les uns des autres de manière uniforme.

5. Procédé de fabrication selon les revendications 1 ou 2, **caractérisé en ce que** la longueur du débord desdits deuxièmes goujons par rapport à la surface dudit moule supérieur varie d'un goujon à l'autre.

6. Corps de coussin réalisé en recourant au procédé selon l'une quelconque des revendications 1 à 5.
